# FASCICULE DE BREVET EUROPEEN

(11) **EP 3 197 766 B1**
(45) Date de publication et mention de la délivrance du brevet: **01.01.2020**
(21) Numéro de dépôt: 15788466.9
(22) Date de dépôt: 17.09.2015
(51) Int. Cl.: B62K 3/00, B62K 5/05, B62K 21/00

(54) **VEHICULE A COLONNE DE DIRECTION INCLINEE**
FAHRZEUG MIT GENEIGTER LENKSÄULE
VEHICLE WITH INCLINED STEERING COLUMN

(30) Priorité: 23.09.2014 FR 1458938
(43) Date de publication de la demande: 02.08.2017
(73) Titulaire: Decathlon, 59650 Villeneuve d'Ascq (FR)
(72) Inventeur: LEMAITRE, Benoît, F-59148 Flines-lez-Raches (FR)
(74) Mandataire: Cabinet Beau de Loménie
(86) Numéro de dépôt international: PCT/FR2015/052493
(87) Numéro de publication internationale: WO 2016/046475

(56) Documents cités:
- CN-A- 101 229 835
- CN-Y- 201 405 978
- US-A- 1 227 888
- US-A- 1 416 864
- US-A1- 2010 013 183

## Description

### Arrière-plan de l'invention

La présente invention a pour objet un véhicule, par exemple du type trottinette. Elle trouve en particulier une application pour la pratique de loisirs de plein-air ou pour des déplacements de moyennes ou longues distances, en particulier en milieu urbain.

On connaît de nombreux exemples de véhicules, tels que des planches à roulettes ou des trottinettes, qui conviennent à ces différentes applications.

Pour faciliter leur utilisation, en particulier par des utilisateurs, tels que des enfants, dont le sens de l'équilibre est peu développé, il existe par exemple des trottinettes qui comportent un plateau pour supporter un utilisateur et comportant un plan de support, un ensemble de direction comprenant une colonne de direction ayant un premier axe et un train avant ayant deux roues. Dans ces trottinettes, la colonne de direction est montée pivotante par rapport au plateau autour du premier axe, le premier axe et le plan de support formant un premier angle. Le train avant est monté pivotant par rapport au plateau autour d'un deuxième axe. La colonne de direction est agencée de manière que son pivotement autour du premier axe entraîne le pivotement du train avant autour du deuxième axe.

Habituellement, les premier et deuxième axes sont confondus et sensiblement perpendiculaires au plan de support du plateau, de sorte que l'utilisation de la trottinette est rendue difficile, peu intuitive et peu stable.

En effet, l'utilisateur se trouve ainsi positionné à proximité de la colonne de direction, généralement à proximité de l'extrémité avant du plateau, risquant alors de chuter du plateau lorsque la trajectoire de la trottinette est modifiée brusquement, par exemple si l'une des roues entre en contact avec une pierre ou la bordure d'un trottoir.

On connaît également du document US 6 511 083 une planche à roulettes dans laquelle le premier axe et le deuxième axe sont inclinés l'un par rapport à l'autre en définissant un deuxième angle.

Néanmoins, dans la planche à roulettes décrite par ce document, l'ensemble de direction est configuré de manière que le premier angle peut être modifié par l'utilisateur lors de l'utilisation de la planche à roulettes, afin de modifier la disposition de l'ensemble de direction et de permettre à l'utilisateur de faire varier la position du centre de gravité, par exemple afin de réaliser des figures acrobatiques.

Cette possibilité de modification du premier angle rend là encore l'utilisation particulièrement instable, et donc inadaptée à des utilisateurs dont le sens de l'équilibre est peu développé.

### Objet et résumé de l'invention

La présente invention a pour but de résoudre, parmi d'autres, les insuffisances décrites plus haut des véhicules existants, en proposant un véhicule stable et pouvant être dirigé de manière aisée et intuitive, même par des utilisateurs disposant d'un faible sens de l'équilibre.

Ce but est atteint par le fait que l'invention porte sur un véhicule, par exemple du type trottinette, comprenant un plateau apte à supporter directement ou indirectement un utilisateur et comportant un plan de support, un train arrière comportant un uniquement moyen de contact, un ensemble de direction comprenant au moins une colonne de direction ayant un premier axe, la colonne de direction étant montée pivotante par rapport au plateau autour du premier axe, le premier axe et le plan de support formant un premier angle. En outre, le véhicule selon la présente invention comporte un train avant ayant au moins un premier et un deuxième moyens de contact avec le sol, le train avant étant monté pivotant par rapport au plateau autour d'un deuxième axe, la colonne de direction étant agencée de manière que son pivotement autour du premier axe entraîne le pivotement du train avant autour du deuxième axe. Dans le véhicule selon la présente invention, le premier axe et le deuxième axe sont inclinés l'un par rapport à l'autre en définissant un deuxième angle, le premier angle étant fixe lors de l'utilisation du véhicule.

De préférence, le deuxième angle est également fixe lors de l'utilisation du véhicule.

Le véhicule selon la présente invention bénéficie ainsi des avantages inhérents au fait que les premier et deuxième axes sont inclinés l'un par rapport à l'autre, sans compromettre le maintien de l'utilisateur sur le plateau et la facilité d'actionnement de l'ensemble de direction.

En effet, si les premier et deuxième axes sont confondus en étant inclinés par rapport à une direction sensiblement perpendiculaire au plan de support, par exemple de manière à éloigner le centre de gravité du véhicule de l'extrémité avant du plateau, l'un des moyens de contact tend à se décoller du sol, lorsque l'utilisateur fait pivoter la colonne de direction ; ce décollement entraîne alors le pivotement du plateau dans le sens opposé à la direction prise par le véhicule, déstabilisant l'utilisateur et risquant de provoquer sa chute.

En outre, le réglage du premier angle, choisi de manière qu'il soit adapté à l'utilisateur du véhicule selon la présente invention, ne risque pas d'être modifié de manière accidentelle lors de l'utilisation du véhicule, un tel changement risquant de perturber l'utilisateur, voire d'entraîner sa chute.

Enfin, la présence, d'une part, des premier et deuxième moyens de contact constituant le train avant, et, d'autre part, d'un unique moyen de contact constituant le train arrière favorise la stabilité du véhicule. On comprend en particulier que le fait que le train arrière comporte un unique moyen de contact permet au véhicule de rester en contact avec le sol, quel que soit le changement de direction inhérent au pivotement de la colonne de direction.

L'invention est déclinée ci-après dans une série de variantes de réalisation, qui peuvent être considérées seules ou en combinaison avec une ou plusieurs des précédentes.

De préférence, le véhicule comporte en outre un dispositif de renvoi d'angle configuré pour assembler l'ensemble de direction et le train avant.

De manière avantageuse, le dispositif de renvoi d'angle comporte :
- un premier élément monté sur la colonne de direction,
- un deuxième élément monté sur le train avant, et
- un troisième élément monté sur le premier élément et sur le deuxième élément.

Avantageusement, le troisième élément est disposé entre le premier élément et le deuxième élément.

De préférence, le premier axe et le deuxième axe sont sécants au niveau du dispositif de renvoi d'angle.

Par cette disposition, et par la structure du dispositif de renvoi d'angle, le fonctionnement du véhicule est encore simplifié, et l'entraînement en rotation du train avant autour du deuxième axe par la rotation autour du premier axe de la colonne de direction est amélioré. En outre, la fiabilité du fonctionnement du véhicule, et plus particulièrement de son changement de direction, est également améliorée.

De manière avantageuse, le dispositif de renvoi d'angle comporte un cardan.

Ainsi, la complexité et le coût de la fabrication du véhicule selon la présente invention sont réduits, et la fiabilité de son fonctionnement est améliorée.

Avantageusement, le premier angle est aigu.

De préférence, le premier angle est supérieur à 45°, de préférence supérieur à 60°.

Le premier angle est plus particulièrement défini entre la portion du plateau configurée pour supporter un utilisateur, et le premier axe s'étendant depuis le train avant dans la direction du moyen de pilotage de la colonne de direction.

Par cette disposition, lorsque la colonne de direction est montée à proximité de l'extrémité avant du plateau, l'inclinaison de la colonne de direction par rapport à une direction sensiblement perpendiculaire au plan de support permet d'éloigner l'utilisateur de l'extrémité avant du plateau. Par suite, le centre de gravité est également éloigné de l'extrémité avant du plateau, de manière à encore améliorer la stabilité de l'ensemble constitué du véhicule et de son utilisateur, lors de l'utilisation du véhicule.

De manière avantageuse, le deuxième axe est incliné par rapport au plan de support du plateau.

Avantageusement, le deuxième axe et le plan de support forment un troisième angle, le troisième angle étant droit.

En d'autres termes, le deuxième axe s'étend selon une direction sensiblement perpendiculaire au plan de support.

Dans cette disposition, les premier et second moyens de contact restent en contact avec le sol lorsque le train avant pivote autour du deuxième axe. La stabilité du véhicule est ainsi la même que pour les trottinettes de l'art antérieur.

Alternativement, le deuxième axe et le plan de support forment un troisième angle, le troisième angle étant obtus.

De manière avantageuse, le troisième angle est supérieur à 95°, de préférence supérieur à 100°.

Le troisième angle est plus particulièrement défini entre la portion du plateau configurée pour supporter un utilisateur, et le deuxième axe s'étendant depuis le train avant sensiblement dans la direction du moyen de pilotage de la colonne de direction.

Par cette disposition, le moyen de contact le plus éloigné du centre de rotation du véhicule tend à s'enfoncer dans le sol lors du pivotement de la colonne de direction autour du second axe, alors que le moyen de contact le plus proche du centre de rotation du véhicule tend à se décoller du sol. En réaction au comportement du train avant, le plateau, sur lequel est monté le train avant, s'incline autour de l'axe longitudinal du véhicule dans le même sens que la direction prise par le véhicule. Ainsi, le plateau du véhicule selon la présente invention s'incline dans le même sens que la direction prise par le véhicule ; la stabilité de l'utilisateur disposé sur le plateau du véhicule se trouve ainsi améliorée.

Par centre de rotation du véhicule, on entend le centre du cercle dont la trajectoire du véhicule dessine un arc lorsque l'utilisateur pivote la colonne de direction autour du premier axe.

Par axe longitudinal du véhicule, on entend l'axe longitudinal de son plateau.

Avantageusement, le troisième angle est également fixe lors de l'utilisation du véhicule.

Par cette disposition, le comportement du train avant et, par suite, celui du plateau, ne risque pas d'être modifié de manière accidentelle lors de l'utilisation du véhicule.

De préférence, le premier moyen de contact avec le sol comporte une première roue montée rotative autour d'un axe de rotation associé.

De manière avantageuse, le second moyen de contact avec le sol comporte une seconde roue montée rotative autour d'un axe de rotation associé.

Ainsi, le déplacement du véhicule est facilité, et sa fabrication et sa maintenance sont simplifiées.

Avantageusement, les axes de rotation de la première roue et de la deuxième roue sont confondus.

Alternativement, la première roue forme un premier carrossage non nul.

De préférence, le premier carrossage est négatif.

Par carrossage, on désigne, considéré dans une vue de face du véhicule, l'angle formé par le plan de roulement de la première roue avec une direction sensiblement perpendiculaire au plan de support du plateau. Ainsi, lorsque le premier carrossage est négatif, le sommet de la première roue est incliné vers le véhicule.

Par cette disposition, entre autres, le maintien de la première roue sur le sol lors du déplacement du véhicule est amélioré.

De manière avantageuse, la deuxième roue forme un deuxième carrossage non nul.

Avantageusement, le deuxième carrossage est identique au premier carrossage.

Par cette disposition, le comportement du véhicule est identique, quel que soit le sens dans lequel la colonne de direction est pivotée autour du premier axe.

De préférence, le train avant comporte un axe longitudinal, le véhicule comportant en outre des moyens de rappel configurés pour disposer l'axe longitudinal du train avant de manière sensiblement parallèle au plan de support du plateau, lorsque la colonne de direction est pivotée autour du premier axe.

Par la présence des moyens de rappel, l'inclinaison de l'axe longitudinal du train avant par rapport au plan de support du plateau, lorsque le train avant est pivoté autour du deuxième axe, est limité, de manière à réduire les risques de déstabilisation de l'utilisateur.

En d'autres termes, la présence des moyens de rappel permet de durcir la direction du véhicule, afin, par exemple, de limiter les effets que pourrait avoir un pivotement brusque de la colonne de direction par l'utilisateur.

L'invention est définie selon les termes de la revendication 1. Des formes de réalisations particulières de l'invention sont définies dans les revendications dépendantes.

### Brève description des dessins

D'autres caractéristiques et avantages de l'invention apparaîtront plus clairement et de manière complète à la lecture de la description ci-après d'un mode de réalisation préféré, donné à titre d'exemple non limitatif et en référence aux dessins annexés suivants sur lesquels :
- la figure **1** représente schématiquement un exemple de véhicule selon la présente invention ;
- la figure **2** représente schématiquement une vue de côté du véhicule de la figure **1** ;
- la figure **3** représente schématiquement une vue éclatée du dispositif de renvoi d'angle d'un véhicule selon la présente invention ;
- la figure **4** représente une vue de derrière du véhicule de la figure **1**, lorsque la colonne de direction est pivotée autour du premier axe ; et
- la figure **5** représente une vue de face du véhicule de la figure **1**.

### Description détaillée de l'invention

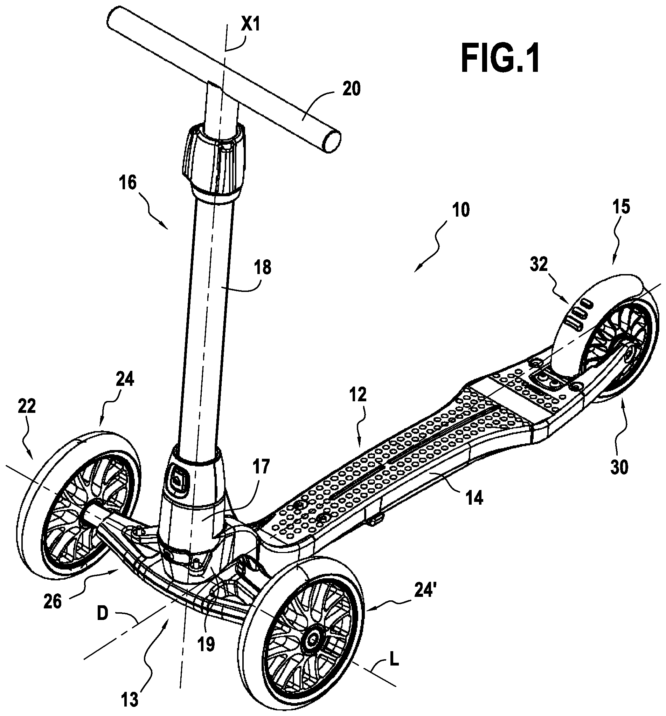

Dans l'exemple représenté à la figure **1**, le véhicule **10**, en l'espèce une trottinette, comprend tout d'abord un plateau **12** comprenant un plan de support **14**, le plateau **12** étant configuré pour supporter, directement ou indirectement, un utilisateur ; le plan de support **14** comprend une direction longitudinale **D** qui définit une extrémité avant **13** et une extrémité arrière **15.**

Par extension, dans la suite de la description, on assimilera les extrémités avant **13** et arrière **15** du plan de support **14** aux extrémités avant et arrière du véhicule **10** selon la présente invention.

Le véhicule **10** comporte en outre en ensemble de direction **16** comprenant une colonne de direction **18** ayant un premier axe **X1** ; l'ensemble de direction **16** comporte en outre un moyen de pilotage **20**, en l'espèce un guidon monté à l'extrémité supérieure de la colonne de direction **18**.

Par extrémité supérieure de la colonne de direction **18**, on entend l'extrémité opposée à celle par laquelle la colonne de direction **18** est solidarisée au plateau **12**.

Le véhicule **10** comporte également un train avant **22**, monté à l'extrémité avant **13** du véhicule **10** ; le train avant comporte, par exemple et de manière non limitative, un premier **24** et un second **24'** moyens de contact, configurés pour assurer le contact du véhicule **10** avec le sol. Par exemple et de manière non limitative, les premier et second moyens de contact **24**, **24'** comportent respectivement une première et une seconde roue **25**, **25'**.

Le train avant **22** comporte également un axe longitudinal **L** et un essieu avant **26**, aux extrémités longitudinales duquel sont montées les première et deuxième **25**, **25'** roues.

En outre, le véhicule **10** selon la présente invention comporte un train arrière **30**, monté à l'extrémité arrière **15** du véhicule **10** ; le train arrière **30** comporte un unique moyen de contact **32**, par exemple une roue.

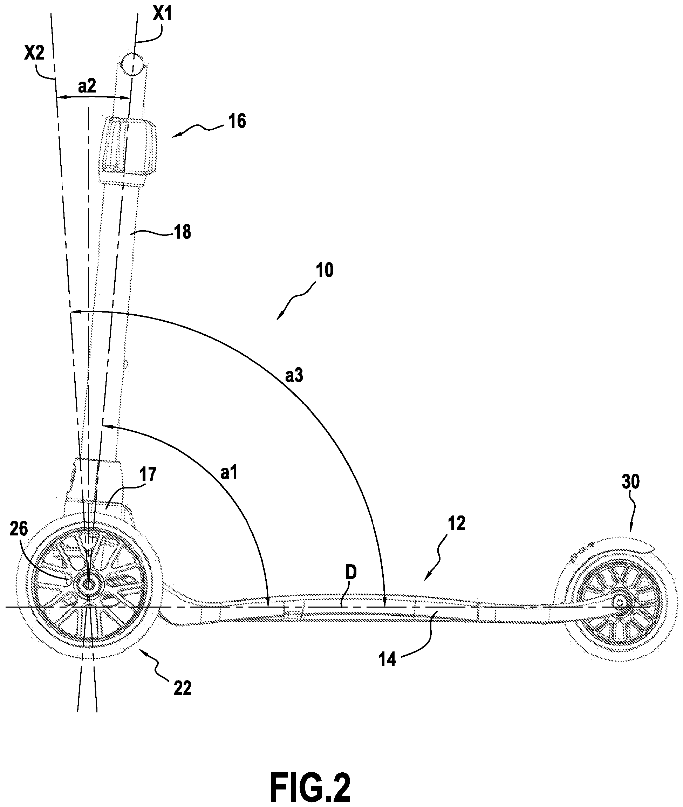

Tel que cela apparaît en particulier sur les figures **1** et **2**, la colonne de direction **18** est montée pivotante par rapport au plateau **12** autour du premier axe **X1**.

Par exemple et de manière non limitative, le plateau **12** comporte un manchon supérieur **17**, configuré pour guider en pivot autour de l'axe **X1** la colonne de direction **18**.

Tel que représenté sur la figure **2**, le premier axe **X1** et le plan de support **14** forment un premier angle **a1** ; par premier angle **a1**, on désigne l'angle formé entre le premier axe **X1** et la direction longitudinale **D** du plan de support **14**, et plus particulièrement formé entre la portion du plateau **12** configurée pour supporter un utilisateur, et le premier axe **X1** s'étendant depuis le train avant **22** dans la direction du moyen de pilotage **20** de la colonne de direction **18.**

Le véhicule **10**, en particulier par la présence du manchon supérieur **17**, est configuré de manière que le premier angle **a1** est fixe ; on pourrait concevoir, et sans sortir du cadre de la présente invention, la présence de moyens de réglage sur le véhicule **10**, configurés pour permettre de modifier la valeur du premier angle **a1**, par exemple en fonction de l'utilisateur du véhicule **10,** préalablement à l'utilisation du véhicule **10**.

Le train avant **22** est monté pivotant par rapport au plateau **12** autour d'un deuxième axe **X2** ; par exemple et de manière non limitative, le plateau **12** comporte un manchon inférieur **19** configuré pour guider en pivot autour du deuxième axe **X2** l'essieu avant **26** du train avant **22.**

Par suite, on comprend que le plateau **12**, l'ensemble de direction **16** et le train avant **22** du véhicule **10** selon la présente invention sont solidarisés les uns aux autres, de sorte qu'ils peuvent être pivotés ensemble autour de la direction longitudinale **D** du plan de support **14.**

Tel que représenté sur la figure **2**, le premier axe **X1** et le deuxième axe **X2** sont inclinés l'un par rapport à l'autre en définissant un deuxième angle **a2**.

Par ailleurs, le deuxième axe **X2** et le plan de support **14** forment un troisième angle **a3** ; par troisième angle **a3**, on désigne, de manière similaire au premier angle **a1**, l'angle formé entre le deuxième axe **X2** et la direction longitudinale **D** du plan de support **14**, et plus particulièrement l'angle formé entre la portion du plateau **12** configurée pour supporter un utilisateur, et le deuxième axe **X2** s'étendant depuis le train avant **22** sensiblement dans la direction du moyen de pilotage **20** de la colonne de direction **18.**

Par exemple et de manière non limitative, le véhicule **10** est configuré de manière que le troisième angle **a3** est fixe ; sans sortir du cadre de la présente invention, on peut également prévoir la présence de moyens de réglage configurés pour modifier la valeur du troisième angle **a3**, préalablement à l'utilisation du véhicule **10**.

On comprend que, dans l'hypothèse où les premier **a1** et troisième **a3** angles sont fixes, le deuxième angle **a2** formé entre les premier **X1** et deuxième **X2** axes est également fixe.

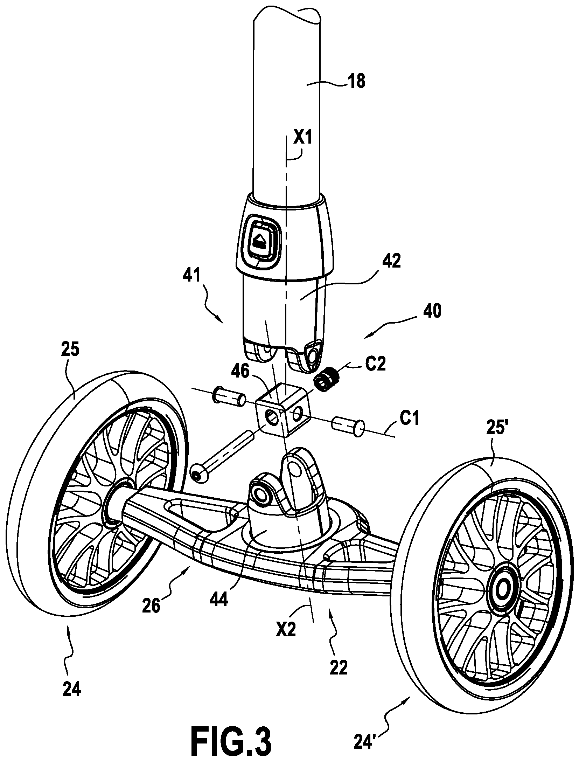

Tel que cela apparaît plus en détails sur la figure **3**, le véhicule **10** selon la présente invention comporte un dispositif de renvoi d'angle **40** configuré pour assembler l'ensemble de direction **16** et le train avant **22** ; par exemple et de manière non limitative, le dispositif de renvoi d'angle **40** du véhicule **10** selon la présente invention comporte un cardan **41.**

Tel que cela apparaît sur les différentes figures, en particulier sur la figure **2**, le premier axe **X1** et le deuxième axe **X2** sont sécants au niveau du dispositif de renvoi d'angle **40**.

Par exemple et de manière non limitative, le dispositif de renvoi d'angle **40** comporte un premier élément **42** monté sur la colonne de direction **18**, un deuxième élément **44** monté sur le train avant **22**, et un troisième élément **46** monté sur le premier élément **42** et sur le deuxième élément **44**, plus particulièrement entre les premier **42** et deuxième **44** éléments.

En particulier, le dispositif de renvoi d'angle **40** comporte un premier axe **C1** comportant, par exemple et de manière non limitative, deux goupilles, le troisième élément **46** étant monté au premier élément **42** par le premier axe **C1**.

En outre, tel que représenté sur la figure **3**, le dispositif de renvoi d'angle **40** comporte également un deuxième axe **C2** comportant, par exemple et de manière non limitative, une vis et un écrou, le troisième élément **46** étant fixé au deuxième élément **44** par le deuxième axe **C2**.

Par exemple et de manière non limitative, le premier élément **42** comporte des moyens de fixation amovibles configurés pour permettre de démonter la colonne de direction **18** du premier élément **42**, par exemple pour faciliter le rangement du véhicule **10** selon la présente invention, lorsqu'il n'est pas utilisé.

On comprend donc que lorsque la colonne de direction **18** pivote autour du premier axe **X1**, elle entraîne également en pivotement autour du premier axe **X1** le premier élément **42** du dispositif de renvoi d'angle **40** ; par suite, du fait de la solidarisation des premier **42** et troisième **46** éléments, le troisième élément **46** est entraîné en rotation.

Le troisième élément **46** entraîne alors à son tour le deuxième élément **44** en rotation autour du deuxième axe **X2.**

Le train avant **22**, sur lequel est monté le deuxième élément **44**, est alors à son tour entraîné en rotation autour du deuxième axe **X2**.

En d'autres termes, on comprend que le dispositif de renvoi d'angle **40** est configuré de manière que le pivotement de la colonne de direction **18** autour du premier axe **X1** entraîne le pivotement du train avant **22** autour du deuxième axe **X2**.

Dit autrement, le dispositif de renvoi d'angle **40** est configuré pour transmettre le pivotement de la colonne de direction **18** au train avant **22**.

Tel que représenté en particulier sur la figure **2**, le premier axe **X1** est incliné par rapport au plan de support **14** du plateau **12**.

Plus particulièrement, le premier axe **X1** est incliné par rapport à une direction sensiblement perpendiculaire par rapport au plan de support **14.**

Ainsi, par exemple et de manière non limitative, le premier angle **a1**, formé entre le premier axe **X1** et le plan de support **14**, est aigu.

L'inclinaison du premier axe **X1** par rapport à une direction sensiblement perpendiculaire au plan de support **14**, permet ainsi d'éloigner le moyen de pilotage **20** de l'extrémité avant **13** du véhicule **10** ; par suite, le centre de gravité du véhicule **10** est également éloigné de l'extrémité avant **13**, afin d'améliorer la stabilité de l'ensemble constitué du véhicule **10** et de son utilisateur.

Par ailleurs, et tel que cela apparaît clairement sur la figure **2**, par exemple et de manière non limitative, le véhicule **10** est configuré de manière que le troisième angle **a3** est obtus ; en d'autres termes, le deuxième axe **X2** est incliné par rapport à une direction sensiblement perpendiculaire au plan de support **14** du plateau **12**.

Par exemple et de manière non limitative, le deuxième axe **X2** est incliné dans la direction opposée au plateau **12** du véhicule **10**.

Par cette disposition, le pivotement du train avant **22** autour du deuxième axe **X2** tend à incliner l'axe longitudinal **L** du train avant **22** par rapport au plan de support **14** du plateau **12.**

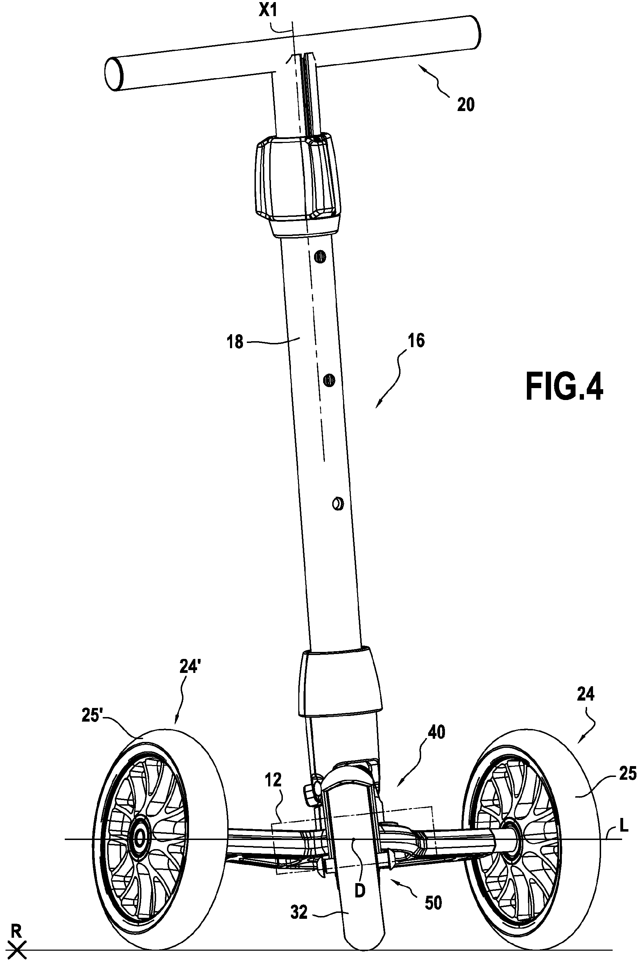

La figure **4** représente une vue de derrière du véhicule **10** lorsque la colonne de direction **18** est pivotée autour du premier axe **X1**, par actionnement du moyen de pilotage **20**.

Dans l'exemple représenté sur cette figure, le pivotement de la colonne de direction **18** autour du premier axe **X1** permet de faire tourner le véhicule **10** vers la gauche, de manière qu'il décrive une trajectoire en forme d'arc de cercle, le centre de rotation **R** du véhicule **10**, défini comme étant le centre du cercle dont la trajectoire du véhicule **10** dessine un arc, étant alors disposé à gauche du véhicule **10**.

Dans ce mode de réalisation, dans lequel le troisième angle **a3** est obtus, le pivotement de la colonne de direction **18** autour du premier axe **X1** entraîne l'inclinaison de l'axe longitudinal **L** du train avant **22** ; le moyen de contact **24'** le plus proche du centre de rotation **R** du véhicule **10** tend alors à se décoller du sol, alors que le moyen de contact **24** le plus éloigné du centre de rotation **R** tend, pour sa part, à s'enfoncer dans le sol.

En réaction, et du fait de la solidarisation du plateau **12** avec le train avant **22**, le plateau **12**, qui, par souci de clarté, est représenté en traits pointillés sur la figure **4**, tend alors à s'incliner autour de son axe longitudinal **D** vers le centre de rotation **R**.

On comprend donc que, du fait de l'inclinaison du deuxième axe **X2**, le pivotement de la colonne de direction **18** autour du premier axe **X1** entraîne le basculement du plateau **12** vers le centre de rotation **R** ; l'utilisateur, qui se tient sur le plan de support **14** du plateau **12,** n'est alors pas déstabilisé par une telle inclinaison du plateau **12**.

Par exemple et de manière non limitative, le véhicule **10** peut comporter des moyens de rappel **50** configurés pour disposer l'axe longitudinal **L** du train avant **22** de manière sensiblement parallèle au plan de support **14** du plateau **12**, lorsque la colonne de direction **18** est pivotée autour du premier axe **X1**, dans l'un ou l'autre des sens permis.

De tels moyens de rappel **50** permettent ainsi, entre autres, de durcir la direction du véhicule **10**, de manière à limiter les effets qu'un pivotement brusque de la colonne de direction **18** pourrait avoir sur la trajectoire du véhicule **10**.

Tel que représenté sur les différentes figures, les première **25** et deuxième **25'** roues des premier **24** et deuxième **24'** moyens de contact du véhicule **10** sont montées rotatives respectivement autour de leurs axes de rotation associés **Y**, **Y'**.

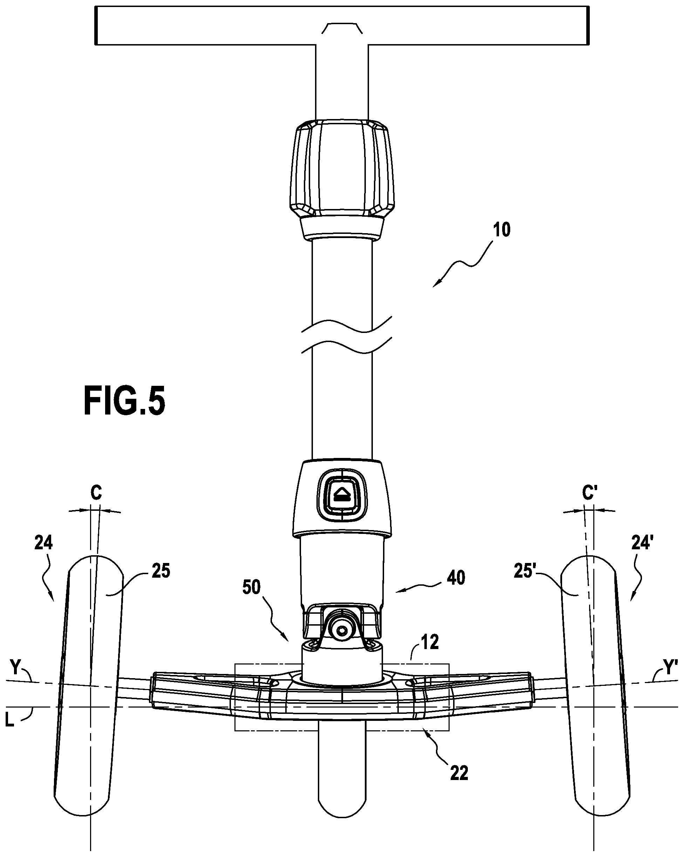

Par exemple et de manière non limitative, tel que représenté sur la figure **5**, sur laquelle par souci de clarté le plateau **12** a également été représenté en traits pointillés, les axes de rotation **Y**, **Y'** sont inclinés par rapport à l'axe longitudinal **L** du train avant **22**.

Ainsi, la première **25** et la deuxième **25'** roues forment respectivement un premier **C** et un deuxième **C'** carrossages non nuls.

Par premier et deuxième carrossages **C**, **C'**, on entend l'angle formé par le plan de roulement, respectivement, de la première **25** et de la deuxième **25'** roues, avec une direction sensiblement perpendiculaire au plan de support **14** du plateau **12**.

Cette inclinaison des première et deuxième roues **25**, **25'** permet, entre autres, d'améliorer l'adhérence du véhicule **10** selon la présente invention.

En outre, le fait que le train arrière **30** comporte un unique moyen de contact **32** participe également à l'adhérence du véhicule **10** selon la présente invention, et à sa stabilité, en particulier lorsque la colonne de direction **18** est actionnée pour modifier la direction de déplacement du véhicule **10**.

La description ci-dessus est donnée à titre d'exemple, et n'est donc pas limitative de l'invention ; en particulier, l'invention, bien que particulièrement adaptée au domaine des trottinettes, peut également équiper tout moyen de déplacement, tel qu'une planche à roulettes, de manière à faciliter le pilotage du véhicule, sans en compromettre la stabilité.

## Revendications

1. Véhicule (10), par exemple du type trottinette, comprenant :
- un plateau (12) apte à supporter directement ou indirectement un utilisateur et comportant un plan de support (14),
- un train arrière (30),
- un ensemble de direction (16) comprenant au moins une colonne de direction (18) ayant un premier axe (X1), la colonne de direction étant montée pivotante par rapport au plateau autour du premier axe, le premier axe et le plan de support formant un premier angle (a1),
- un train avant (22) ayant au moins un premier (24) et un deuxième (24') moyens de contact avec le sol,
- le train avant étant monté pivotant par rapport au plateau autour d'un deuxième axe (X2),
- la colonne de direction étant agencée de manière que son pivotement autour du premier axe entraîne le pivotement du train avant autour du deuxième axe,
- le premier axe et le deuxième axe étant inclinés l'un par rapport à l'autre en définissant un deuxième angle (a2),
le véhicule étant **caractérisé en ce que** le train arrière (30) comporte un unique moyen de contact (32), **en ce que** le premier angle est fixe lors de l'utilisation du véhicule et **en ce que** le plan de support (14) comporte en outre un axe longitudinal (D), le véhicule étant configuré de manière que le plateau (12) s'incline autour de l'axe longitudinal (D) vers le centre (R) du cercle dont la trajectoire du véhicule dessine un arc par le pivotement de la colonne de direction (18) autour du premier axe (X1).

2. Véhicule (10) selon la revendication **1**, **caractérisé en ce qu'**il comporte en outre un dispositif de renvoi d'angle (40) configuré pour assembler l'ensemble de direction et le train avant.

3. Véhicule (10) selon la revendication **2**, **caractérisé en ce que** le dispositif de renvoi d'angle comporte :
- un premier élément (42) monté sur la colonne de direction (18),
- un deuxième élément (44) monté sur le train avant (22), et
- un troisième élément (46) monté sur le premier élément et sur le deuxième élément.

4. Véhicule (10) selon la revendication **3**, **caractérisé en ce que** le troisième élément est disposé entre le premier élément et le deuxième élément.

5. Véhicule (10) selon l'une quelconque des revendications **2 à 4**, **caractérisé en ce que** le premier axe (X1) et le deuxième axe (X2) sont sécants au niveau du dispositif de renvoi d'angle (40).

6. Véhicule (10) selon l'une quelconque des revendications **2 à 5**, **caractérisé en ce que** le dispositif de renvoi d'angle comporte un cardan (41).

7. Véhicule (10) selon l'une quelconque des revendications **1 à 6**, **caractérisé en ce que** le premier angle (a1) est aigu.

8. Véhicule (10) selon l'une quelconque des revendications **1 à 7**, **caractérisé en ce que** le deuxième axe (X2) est incliné par rapport au plan de support du plateau.

9. Véhicule (10) selon la revendication **8**, **caractérisé en ce que** le deuxième axe et le plan de support forment un troisième angle (a3), le troisième angle étant obtus.

10. Véhicule (10) selon la revendication **9**, **caractérisé en ce que** le troisième angle est fixe lors de l'utilisation du véhicule.

11. Véhicule (10) selon l'une quelconque des revendications **1 à 10**, **caractérisé en ce qu'**au moins l'un des premier et deuxième moyens de contact (24, 24') du train avant avec le sol comporte une roue (25, 25') montée rotative autour d'un axe de rotation associé (Y, Y').

12. Véhicule (10) selon la revendication **11**, **caractérisé en ce que** la roue (25, 25') forme un carrossage (C, C') non nul.

13. Véhicule (10) selon l'une quelconque des revendications **1 à 12**, **caractérisé en ce que** le train avant (22) comporte un axe longitudinal (L), le véhicule comportant en outre des moyens de rappel (50) configurés pour disposer l'axe longitudinal du train avant de manière sensiblement parallèle au plan de support (14) du plateau (12), lorsque la colonne de direction (18) est pivotée autour du premier axe (X1).

## Patentansprüche

1. Fahrzeug (10), zum Beispiel vom Typ eines Tretrollers, umfassend:
- eine Plattform (12), die dazu geeignet ist, direkt oder indirekt einen Benutzer zu tragen, und eine Tragebene (14) beinhaltet,
- ein hinteres Fahrwerk (30),
- eine Lenkanordnung (16), die zumindest eine Lenksäule (18) umfasst, welche eine erste Achse (X1) aufweist, wobei die Lenksäule in Bezug auf die Plattform um die erste Achse schwenkbar montiert ist und die erste Achse und die Tragebene einen ersten Winkel (a1) bilden,
- ein vorderes Fahrwerk (22), das zumindest ein erstes (24) und ein zweites (24') Mittel für den Kontakt mit dem Boden aufweist,
- wobei das vordere Fahrwerk in Bezug auf die Plattform um eine zweite Achse (X2) schwenkbar montiert ist,
- wobei die Lenksäule auf eine Weise angeordnet ist, dass ihr Schwenken um die erste Achse das Schwenken des vorderen Fahrwerks um die zweite Achse antreibt,
- wobei die erste Achse und die zweite Achse in Bezug zueinander geneigt sind, wodurch sie einen zweiten Winkel (a2) definieren,
wobei das Fahrzeug **dadurch gekennzeichnet ist,**
**dass** das hintere Fahrwerk (30) ein einzelnes Mittel für den Kontakt (32) beinhaltet,
**dass** der erste Winkel bei der Verwendung des Fahrzeugs fixiert ist, und
**dass** die Tragebene (14) ferner eine Längsachse (D) beinhaltet, wobei das Fahrzeug auf eine Weise ausgestaltet ist, dass die Plattform (12) sich um die Längsachse (D) zu dem Mittelpunkt (R) des Kreises neigt, von welchem die Bahn des Fahrzeugs durch das Schwenken der Lenksäule (18) um die erste Achse (X1) einen Kreisbogen schreibt.

2. Fahrzeug (10) nach Anspruch 1, **dadurch gekennzeichnet, dass** es ferner eine Winkelgetriebevorrichtung (40) beinhaltet, die dazu ausgestaltet ist, die Lenkanordnung und das vordere Fahrwerk zusammenzubauen.

3. Fahrzeug (10) nach Anspruch 2, **dadurch gekennzeichnet, dass** die Winkelgetriebevorrichtung beinhaltet:
- ein erstes Element (42), das an der Lenksäule (18) montiert ist,
- ein zweites Element (44), das an dem vorderen Fahrwerk (22) montiert ist, und
- ein drittes Element (46), das an dem ersten Element und an dem zweiten Element montiert ist.

4. Fahrzeug (10) nach Anspruch 3, **dadurch gekennzeichnet, dass** das dritte Element zwischen dem ersten Element und dem zweiten Element angeordnet ist.

5. Fahrzeug (10) nach einem der Ansprüche 2 bis 4, **dadurch gekennzeichnet, dass** die erste Achse (X1) und die zweite Achse (X2) sich im Bereich der Winkelgetriebevorrichtung (40) schneiden.

6. Fahrzeug (10) nach einem der Ansprüche 2 bis 5, **dadurch gekennzeichnet, dass** die Winkelgetriebevorrichtung eine Kardanlagerung (41) beinhaltet.

7. Fahrzeug (10) nach einem der Ansprüche 1 bis 6, **dadurch gekennzeichnet, dass** der erste Winkel (a1) spitz ist.

8. Fahrzeug (10) nach einem der Ansprüche 1 bis 7, **dadurch gekennzeichnet, dass** die zweite Achse (X2) in Bezug auf die Tragebene der Plattform geneigt ist.

9. Fahrzeug (10) nach Anspruch 8, **dadurch gekennzeichnet, dass** die zweite Achse und die Tragebene einen dritten Winkel (a3) bilden, wobei der dritte Winkel stumpf ist.

10. Fahrzeug (10) nach Anspruch 9, **dadurch gekennzeichnet, dass** der dritte Winkel während der Verwendung des Fahrzeugs fixiert ist.

11. Fahrzeug (10) nach einem der Ansprüche 1 bis 10, **dadurch gekennzeichnet, dass** zumindest eines von dem ersten und zweiten Mittel für den Kontakt (24, 24') des vorderen Fahrwerks mit dem Boden ein Rad (25, 25') beinhaltet, das um eine zugehörige Drehachse (Y, Y') drehbar montiert ist.

12. Fahrzeug (10) nach Anspruch 11, **dadurch gekennzeichnet, dass** das Rad (25, 25') einen Sturzwinkel (C, C') ungleich null aufweist.

13. Fahrzeug (10) nach einem der Ansprüche 1 bis 12, **dadurch gekennzeichnet, dass** das vordere Fahrwerk (22) eine Längsachse (L) beinhaltet, wobei das Fahrzeug ferner Rückstellmittel (50) beinhaltet, die dazu ausgestaltet sind, die Längsachse des vorderen Fahrwerks auf im Wesentlichen parallele Weise zu der Tragebene (14) des Plateaus (12) anzuordnen, wenn die Lenksäule (18) um die erste Achse (X1) geschwenkt wird.

## Claims

1. A vehicle (10) e.g. of the scooter type, comprising:
• a deck (12) suitable for supporting a user directly or indirectly and having a support plane (14);
• tail gear (30);
• a steering assembly (16) comprising at least one steering column (18) having a first axis (X1), the steering column being mounted to pivot relative to the deck about a first axis, the first axis and the support plane forming a first angle (a1);
• nose gear (22) having at least first and second ground contact means (24, 24');
• the nose gear being pivotally mounted relative to the deck about a second axis (X2);
• the steering column being arranged so that pivoting the steering column about the first axis causes the nose gear to pivot about the second axis;
• the first axis and the second axis sloping relative to each other and defining a second angle (a2);
the vehicle being **characterized in that** the tail gear (30) has single contact means (32), **in that** he first angle is not variable while the vehicle is in use and **in that** the support plane (14) further includes a longitudinal axis (D), the vehicle being configured in such a manner that the deck (12) slopes about the longitudinal axis (D) towards the center (R) of the circle having an arc that is drawn by the path of the vehicle when the steering column (18) is pivoted about the first axis (X1).

2. A vehicle (10) according to claim 1, **characterized in that** it further includes an angle joint device (40) configured to connect together the steering assembly and the nose gear.

3. A vehicle (10) according to claim 2, **characterized in that** the angle joint device comprises:
• a first element (42) mounted on the steering column (18);
• a second element (44) mounted on the nose gear (22); and
• a third element (46) mounted on the first element and on the second element.

4. A vehicle (10) according to claim 3, **characterized in that** the third element is arranged between the first element and the second element.

5. A vehicle (10) according to any one of claims 2 to 4, **characterized in that** the first axis (X1) and the second axis (X2) intersect in the angle joint device (40).

6. A vehicle (10) according to any one of claims 2 to 5, **characterized in that** the angle joint device comprises a cardan joint (41).

7. A vehicle (10) according to any one of claims 1 to 6, **characterized in that** the first angle (a1) is an acute angle.

8. A vehicle (10) according to any one of claims 1 to 7, **characterized in that** the second axis (X2) slopes relative to the support plane of the deck.

9. A vehicle (10) according to claim 8, **characterized in that** the second axis and the support plane form a third angle (a3), the third angle being an obtuse angle.

10. A vehicle (10) according to claim 9, **characterized in that** the third angle is not variable while the vehicle is in use.

11. A vehicle (10) according to any one of claims 1 to 10, **characterized in that** at least one of the first and second ground contact means (24, 24') of the nose gear comprise a wheel (25, 25') mounted to rotate about an associated axis of rotation (Y, Y').

12. A vehicle (10) according to claim 11, **characterized in that** the wheel (25, 25') forms a non-zero camber (C, C').

13. A vehicle (10) according to any one of claims 1 to 12, **characterized in that** the nose gear (22) has a longitudinal axis (L), the vehicle also having return means (50) configured to place the longitudinal axis of the nose gear so as to be substantially parallel to the support plane (14) of the deck (12) when the steering column (18) is pivoted about the first axis (X1).
